(19) Europäisches Patentamt
European Patent Office
Office européen des brevets

(11) **EP 3 166 022 A1**

(12) **EUROPEAN PATENT APPLICATION**

(43) Date of publication:
**10.05.2017 Bulletin 2017/19**

(51) Int Cl.:
***G06F 17/30*** $^{(2006.01)}$

(21) Application number: **15306771.5**

(22) Date of filing: **06.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **BILEN, Cagdas**
**35576 Cesson-Sévigné (FR)**
• **ZEPEDA SALVATIERRA, Joaquin**
**35576 Cesson-Sévigné (FR)**
• **PEREZ, Patrick**
**35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR IMAGE SEARCH USING SPARSIFYING ANALYSIS OPERATORS**

(57) In a particular implementation, images are represented by feature vectors, whose sparse representations are computed using an analysis operator. The sparse representations of the images are then used to efficiently compute similarity metrics between the images. Using pair-wise constraints where each pair of images is indicated as similar or dissimilar, the analysis operator can be trained for the task of image matching. Using triplet constraints wherein a first image and a second image are indicated as more similar than the first image and a third image are, the analysis operator can be trained for the task of image ranking. The analysis operator can be computed using an optimization problem based on a penalty function and sparsity constraints, or using a multiple layer neural network. The analysis operator can also be used to compute a Mahalanobis metric transformation matrix.

<u>100</u>

| Input query image | ~ 110 |
| Image feature vector calculation | ~ 120 |
| Compact representation | ~ 130 |
| Distance/similarity calculation | ~ 140 |
| Image ranking | ~ 150 |
| Output matching image(s) | ~ 160 |

*FIG. 1*

EP 3 166 022 A1

**Description**

<u>TECHNICAL FIELD</u>

This invention relates to a method and an apparatus for image search, and more particularly, to a method and an apparatus for image search using sparsifying analysis operators.

<u>BACKGROUND</u>

With the increasing size of image collections and the related difficulty in manually annotating them, automated image search and comparison methods have become crucial when searching for relevant images in a large collection. Many systems that currently exist enable such search approaches, including commercial web search engines that admit an image as the query and return a ranked list of relevant web images; copyright infringement detection methods that are robust to image manipulations such as cropping, rotation, mirroring and picture-in-picture artifacts; semantic search systems that enable querying of an unannotated private image collection based on visual concepts (*e.g.*, cat); object detection systems that are robust to the image background content; automatic face verification methods; and vision-based navigation systems used, for example, as part of the control mechanism of self-driving cars.

A general image search algorithm can be seen as having various goals including: i) finding correctly matching images given a task-specific search criteria and ii) doing so in a time and resource efficient manner, particularly in the context of large image databases. In addressing the first goal, discriminative Mahalanobis metric learning methods have become an important part of the research toolbox. Such methods can be seen as applying an explicit linear transform to the image feature vector with the goal of making distance computations between transformed feature vectors better correspond to the search criteria. The linear transform can be learned using one of a variety of objectives in order to adapt it to various possible search criteria including image classification, face verification, or image ranking. Common to all these methods is the fact that the learned linear transform is a complete or undercomplete matrix that is constant for all image feature vectors.

Concerning the second goal of image search systems, that of time and resource efficiency of the search process, one recent successful method represents all the database images using a product quantizer that enables both a very compact representation and a very efficient comparison to query features. Methods based on sparse coding have also been attempted, as sparse coding can be seen as a generalization of vector quantization. The general aim of these methods is to produce a very compact representation of the input feature vector consisting, for example, of codeword indices and possibly accompanying weights.

<u>SUMMARY</u>

According to a general aspect, a method for performing image search is presented, comprising: accessing a first sparse representation of a query image, the first sparse representation being based on a first feature vector corresponding to the query image and an analysis operator; determining a similarity metric between the query image and a second image of an image database using a correlation between the first sparse representation and a second representation, the second sparse representation being based on a second feature vector corresponding to the second image and the analysis operator; and generating an image search output based on the similarity metric between the query image and the second image.

The image search output may indicate one of (1) a rank of the second image and (2) whether the second image matches the query image.

The method for performing image search may receive the first sparse representation from a user device via a communication network, and may further transmit the output to the user device via the communication network.

The first sparse representation may be based on a product of the analysis operator and the first feature vector, and the second sparse representation may be based on a product of the analysis operator and the second feature vector.

At least one of the first sparse representation and the second sparse representation may be binary.

The first sparse representation and the second sparse representation may be non-binary, and the method for performing image search may determine the first sparse representation and the second sparse representation from a third sparse representation and a fourth sparse representation, respectively, wherein the third sparse representation and the fourth sparse representation are binary.

The method for performing image search may determine the analysis operator based on a set of pair-wise constraints, wherein each pair-wise constraint indicates whether a corresponding pair of training images are similar or dissimilar.

The method for performing image search may determine the analysis operator based on a set of triplet constraints, wherein each triplet constraint indicates that a first training image of the triplet is more similar to a second training image of the triplet than to a third training image of the triplet.

The method for performing image search may train the analysis operator such that a similarity metric determined for training images corresponding to a pair-wise constraint or a triplet constraint is consistent with what the pair-wise constraint or the triplet constraint indicates. The analysis operator may be determined using a penalty function. Further, the analysis operator may be determined using a multiple layer neural network.

The analysis operator can be used to determine a Mahalanobis metric transformation matrix.

The present embodiments also provide an apparatus for performing image search, comprising a memory and one or more processors configured to perform any of the methods described above.

The present embodiments also provide a non-transitory computer readable storage medium having stored thereon instructions for performing any of the methods described above.

BRIEF DESCRIPTION OF THE DRAWINGS

FIG. 1 illustrates an exemplary method for performing image search, according to an embodiment of the present principles.

FIG. 2 illustrates an exemplary method for learning the operator for the similarity function.

FIG. 3 shows exemplary pictures from an image training database, where similar images are grouped together, and images from different groups are dissimilar.

FIG. 4 illustrates an exemplary analysis encoding process for generating a sparse code **z** for vector **y**, according to an embodiment of the present principles.

FIG. 5A shows a parametrized hinge loss function, and FIG. 5B shows a continuous hinge loss function.

FIG. 6 illustrates an exemplary process for learning analysis operator **A** using pair-wise constraints, according to an embodiment of the present principles.

FIG. 7A shows exemplary sparse codes for images in a database, and FIG. 7B is an expanded view of the upper-right portion of FIG. 7A.

FIG. 8A illustrates an exemplary process for performing image matching, according to an embodiment of the present principles, and FIG. 8B illustrates an exemplary process for performing image ranking for a query image, according to an embodiment of the present principles.

FIG. 9 illustrates an exemplary method for performing image search based on a Mahalanobis metric, according to an embodiment of the present principles.

FIG. 10 illustrates a block diagram of an exemplary system in which multiple user devices are connected to an image search engine according to the present principles.

FIG. 11 illustrates a block diagram of an exemplary system in which various aspects of the exemplary embodiments of the present principles may be implemented.

DETAILED DESCRIPTION

The present principles are directed to image search and provide various features compared to the existing methods. First, the proposed approaches may rely on a correlation metric to compare different items instead of a distance metric as in the majority of earlier works. This enables a more flexible framework than those based on the distance metric while offering computational efficiency. Secondly, the proposed methods may use sparse representations in the proposed correlation metrics. This enables efficient storage of the data items in a database and improves the computation speed when used together with the proposed correlation metrics. Thirdly, the proposed methods can also be adapted for use with query items for which the sparse representation is not initially available so that correlation comparison can still be performed quickly while still providing the advantages mentioned above.

In the present application, we denote scalars, vectors and matrices using, respectively standard, bold, and uppercase-bold typeface (e.g., scalar $\alpha$, vector **a** and matrix **A**). We use $\mathbf{v}_k$ to denote a vector from a sequence $\mathbf{v}_1$, $\mathbf{v}_2$, ..., $\mathbf{v}_N$, and $v_k$ to denote the $k$-th coefficient of vector **v**. We let $[\mathbf{a}_k]_k$ (respectively, $[\alpha_k]_k$) denotes concatenation of the vectors $\mathbf{a}_k$ (scalars $\alpha_k$) to form a single column vector. The transpose of a vector **v** is denoted by $\mathbf{v}^\mathsf{T}$ (similarly for a matrix). Finally, we use $\frac{\partial \mathbf{y}}{\partial \mathbf{x}}$ to denote the Jacobian matrix with $(i,j)$-th entry $\frac{\partial y_i}{\partial x_j}$.

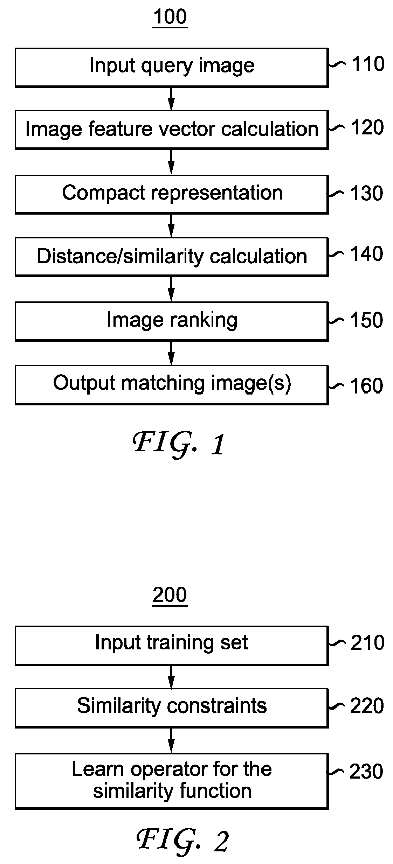

FIG. 1 illustrates an exemplary method 100 for performing image search, according to an embodiment of the present principles. At step 110, a query image is input and image search will be performed in an image database to return one or more matching images for the query image. At step 120, a feature vector is calculated for the query image.

A feature vector of an image contains information describing an image's important characteristics. Image search algorithms usually rely on an image encoding function to compute the feature vector $\mathbf{y} \in \mathbb{R}^N$ from a given image.

Common image feature construction approaches consist of first densely extracting local descriptors $\mathbf{x}_i \in \mathbb{R}^d$ such as SIFT (Scale-invariant feature transform) from multiple resolutions of the input image and then aggregating these descriptors into a single vector **y**. Common aggregation techniques include methods based on $K$-means models of the local descriptor distribution, such as bag-of-words and VLAD (Vector of Locally Aggregated Descriptors) encoding, and Fisher encoding, which is based on a GMM (Gaussian Mixture Model) model of the local descriptor distribution.

At step 130, a compact representation is calculated for the feature vector. In many applications, a compact representation of a given data is a point of interest since these representations provide a better understanding of the underlying structures in the data. Compact representation can be any representation that represents original vectors by smaller data. Compact representation can be obtained by linear projection on a subspace resulting in smaller vectors than the original data size, or can be sparse representation, for example, obtained using a synthesis model and an analysis model as described below.

Synthesis Model and Dictionary Learning

Representing a data vector $\mathbf{y} \in \mathbb{R}^N$ as a weighted sum of $M$ known atoms $\mathbf{d}_i \in \mathbb{R}^N$ as in

$$\mathbf{y} = \sum_{i=1}^{M} x_i \mathbf{d}_i = \begin{bmatrix} \mathbf{d}_1 & \ldots & \mathbf{d}_M \end{bmatrix} \begin{bmatrix} x_1 \\ \vdots \\ x_M \end{bmatrix} = \mathbf{D}\mathbf{x} \qquad (1)$$

is called the synthesis model, and vector **x** is called the representation of vector **y** in dictionary **D**. This representation is often more useful when the representation **x** has only few non-zero entries, *i.e.*, when **x** is sparse. For a given dictionary **D**, one can obtain a sparse representation of data vector **y** by using an encoder function so that $\mathbf{x} = E(\mathbf{y}, \mathbf{D})$. The encoder function E() enforces sparsity on **x** while keeping the distance to the original data vector, d(**y**, **Dx**), sufficiently small. A common example of such an encoder function is the lasso regression defined as

$$E(\mathbf{y}, \mathbf{D}) = \underset{\mathbf{x}}{\operatorname{argmin}} \|\mathbf{y} - \mathbf{D}\mathbf{x}\|_2^2 + \lambda \|\mathbf{x}\|_1 \qquad (2)$$

in which the $l_1$-norm and $l_2$-norm of a vector of size $N$ are defined respectively as

$$\|\mathbf{v}\|_1 \triangleq \sum_{k=1}^{N} |v_k| \quad , \quad \|\mathbf{v}\|_2 \triangleq \sqrt{\sum_{k=1}^{N} |v_k|^2} \qquad (3)$$

The regression parameter $\lambda$ in Eq. (2) defines the tradeoff between the sparsity and the distance.

When many data points in a training set are available, $\mathbf{y}_i \in \mathcal{T}$, one can try to find a common dictionary that can sparsely represent all the points in the set. This procedure is called dictionary learning, commonly used in machine learning and signal processing. In general the dictionary learning methods can be posed as an optimization problem:

$$\bar{\mathbf{x}}_1,\ldots,\bar{\mathbf{x}}_T,\bar{\mathbf{D}} = \underset{\mathbf{x}_1,\ldots,\mathbf{x}_T,\mathbf{D}}{\mathrm{argmin}}\ \delta(\mathbf{y}_1,\mathbf{Dx}_1,\ldots,\mathbf{y}_T,\mathbf{Dx}_T) + \phi(\mathbf{x}_1,\ldots,\mathbf{x}_T) + \psi(\mathbf{D}) \qquad (4)$$

in which function $\delta()$ enforces a small distance between each data vector $\mathbf{y}_i$ and its sparse representation $\mathbf{Dx}_i$, the regularization function $\phi()$ enforces sparse representations and the regularization function $\psi()$ enforces certain structures within the dictionary $\mathbf{D}$ such as unit norm columns.

Analysis Model and Analysis Operator Learning

As an alternative to representing a data vector as a sum of few essential components as in the synthesis model, one can inspect specific properties of the data vector which is called the analysis model. A linear analysis operator, $\mathbf{A}$, can be applied to data point $\mathbf{y}$ as in

$$\mathbf{z} = \mathbf{Ay} \qquad (5)$$

so that the output vector $\mathbf{z}$ contains essential information on $\mathbf{y}$. The analysis operators can be very useful if the output, $\mathbf{z}$, is known to be sparse. However unlike synthesis representations, given the vector $\mathbf{z}$ the original vector $\mathbf{y}$ is often not unique. Hence one can distinguish two types of utilizing analysis operators and sparsity. The first one is finding a vector close to $\mathbf{y}_s$ that would have a sparse output vector (or sparse code) with $\mathbf{A}$, where $\mathbf{y}_s$ represents a vector for which $\mathbf{Ay}_s$ is sparse and $\mathbf{y}_s$ and $\mathbf{y}$ are as close as possible. A common optimization method for this purpose is

$$\bar{\mathbf{y}} = \underset{\mathbf{y}}{\mathrm{argmin}}\ \|\mathbf{y}-\mathbf{y}_s\|_2^2 + \lambda\|\mathbf{Ay}\|_1 \qquad (6)$$

which is similar to lasso regression used in sparse coding. Similar to dictionary learning, analysis operators can also be learned for large datasets to be used in tasks such as denoising or deconvolution.

The second possible approach is simply finding a sparse code $\mathbf{z}$ close to $\mathbf{Ay}_s$. This is more useful for applications in which $\mathbf{z}$ is more of interest than $\mathbf{y}$. Since $\mathbf{Ay}$ is already known, this operation is often much simpler than solving Eqs. (2) and (6).

Referring back to FIG. 1, distance or similarity measures are calculated between the query image and database images at step 140. The measures can be calculated using the feature vectors of the query image and database images, or using compact representations of the query image and the database images, for example, using a Mahalanobis metric. Based on the distance or similarity measures, images are ranked at step 150. One or more matching images are then output at step 160.

The aim of Mahalanobis metric learning is to learn a task-specific distance metric function

$$D_{\mathbf{M}}(\mathbf{y}_1,\mathbf{y}_2) = (\mathbf{y}_1-\mathbf{y}_2)^T\mathbf{M}^T\mathbf{M}(\mathbf{y}_1-\mathbf{y}_2) \qquad (7)$$

for comparing two feature vectors $\mathbf{y}_1$ and $\mathbf{y}_2$, where $\mathbf{M}$ (or $\mathbf{M}^T\mathbf{M}$) is the Mahalanobis metric transformation matrix. Such learned distances have been used extensively to adapt feature vectors to various image search related tasks. For example, the Mahalanobis metric can be used in a face verification problem where the feature vectors $\mathbf{y}_1$ and $\mathbf{y}_2$ are extracted from images of faces and the aim is to learn $\mathbf{M}$ so that the test

$$D_{\mathbf{M}}(\mathbf{y}_1,\mathbf{y}_2) > 0 \qquad (8)$$

specifies whether the face images are of the same person.

The Mahalanobis metric can also be used in nearest-neighbor-based classification methods. In this case, a set of labeled image feature vectors $\{\mathbf{y}_i, \gamma_i \in \{1,\ldots,C\}\}_i$ belonging to one of $C$ classes is used as a classifier. Given a new test feature $\mathbf{y}$, the class label $\gamma_i$ assigned to it is that of the nearest $\mathbf{y}_i$ under the Mahalanobis metric,

$$\gamma_i \text{ s.t. } i = \operatorname*{argmin}_j D_{\mathbf{M}}(\mathbf{y}, \mathbf{y}_j). \tag{9}$$

Extensions of this approach can also use a voting scheme based on the closest n features.

Another task that can be addressed by Mahalanobis metric learning is that of image ranking. In this case, we are given a query feature vector $\mathbf{y}^q$ and we wish to sort a database of features $\{\mathbf{y}_i\}_i$ so that

$$D_{\mathbf{M}}(\mathbf{y}^q, \mathbf{y}_{i_j}) < D_{\mathbf{M}}(\mathbf{y}^q, \mathbf{y}_{i_{j+1}}). \tag{10}$$

In this case, matrix **M** is learned so that the resulting ranking operation corresponds to human visual perception.

In the present application, we consider the problem of efficiently comparing and ranking items taken from a large set. An example of such a setup can be the comparison of images or a set of image features. In the following, we propose several optimization approaches that make use of both the sparse representations and some given constraints to determine a better estimate for the similarity function that is adapted to the tasks of verification and ranking.

FIG. 2 illustrates an exemplary method 200 for determining the operator for the similarity function. A training set is input at step 210, which may be a database with annotations, for example, indicating whether pictures are similar or dissimilar. The database imposes constraints on the similarity function at step 220, for example, if two pictures are indicated as similar in the training database, the learned similarity function should provide a high similarity score between these two pictures. Given the constraints on similarity between pictures, the operator for the similarity function can be learned at step 230. In the following, the similarity constraints and various learning methods are described in further detail.

**Constraints**

Let $I$ represent one of many items that we would like to compare. Let it also be given that every data item $I$ is associated with a data vector $\mathbf{y} \in \mathbb{R}^N$. For the example of comparing images, the items represent the images to be compared whereas the data vectors are features extracted from each image for easier processing. We denote $S^*(I_1, I_2)$ as the similarity function that tracks the human perception for every item pair $(I_1, I_2)$, and we aim to design a similarity function that is close to $S^*(I_1, I_2)$. From the training images, a set of constraints over S'() and a training set $I_i, i = 1...., T$ (with corresponding data vectors $\mathbf{y}_i \in \mathcal{T}$) can be obtained. In one embodiment, we consider two types of constraints each related to a different task of interest.

Pair-wise Constraints and Matching:

In a simpler case, each constraint is defined by a pair of data points and an indicator variable as

$$\{C_{\mathrm{pair},p}\}_{p-1}^m = \{i_p, j_p, \gamma_p \,|\, \gamma_p = \left\{ \begin{array}{l} 1 \ \textit{if } S^*(I_{i_p}, I_{j_p}) \geq s_c \\ -1 \ \textit{if } S^*(I_{i_p}, I_{j_p}) < s_c \end{array} \right\} \tag{12}$$

for a constant $s_c$ that tracks human perception so that the variable $\gamma_p$ is 1 if two data points are sufficiently similar (or in the same cluster) and -1 if not. Such pairwise constraints are relevant to a task such as matching. Without loss of generality, we define the task of matching as finding a function, $S(\mathbf{v}_1, \mathbf{v}_2)$, given the constraints $\{C_{\mathrm{pair},p}\}_{p=1}^m$, such that for any given pair of query items and their corresponding data vectors, $(\mathbf{y}_{q1}, \mathbf{y}_{q2})$, the function s() satisfies $S(\mathbf{y}_{q1}, \mathbf{y}_{q2}) \geq 0$ if $S^*(I_{q1}, I_{q2}) \geq s_c$ and $S(\mathbf{y}_{q1}, \mathbf{y}_{q2}) < 0$ otherwise.

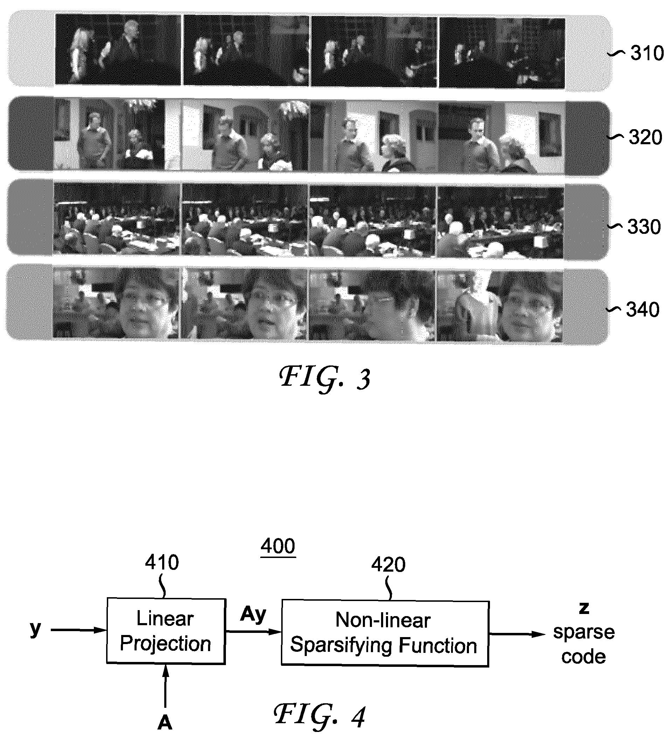

FIG. 3 shows exemplary pictures from an image training database, where similar images are grouped together, and images from different groups are dissimilar. Particularly, pictures in the same row (310, 320, 330, or 340) are grouped together in FIG. 3. The pair-wise constraints between two images within a group are set to 1, and the pair-wise constraints between two images from different groups are set to -1.

The task of matching can be described as determining whether a given query data belongs to a cluster in a dataset. For example, in face recognition systems, the given facial picture of a person is compared to other facial data of the same person within the database to perform verification. It is also possible to perform matching between two given data points even though these points belong to a cluster different from the observed clusters in the database.

Triplet Constraints and Ranking:

A more informative set of constraints are defined by a triplet of data points as

$$\{C_{\text{triplet},p}\}_{p=1}^{m} = \{i_p, j_p, k_p \mid S^*(I_{i_p}, I_{j_p}) > S^*(I_{i_p}, I_{k_p})\} \qquad (13)$$

That is, in one triplet, item $I_{ip}$ is more similar to item $I_{jp}$ than to item $I_{kp}$. The constraints over triplets provide more information on the similarity function and are useful for tasks such as ranking. The task of ranking can be defined as finding a function, $S(\mathbf{v}_1, \mathbf{v}_2)$ given the constraints $\{C_{\text{triplet},p}\}_{p=1}^{m}$, such that for any given triplet of items $(q_1, q_2, q_3)$ obeying $S^*(I_{q1}, I_{q2}) > S^*(I_{q1}, I_{q3})$, the function S() satisfies the condition $S(\mathbf{y}_{q1}, \mathbf{y}_{q2}) > S(\mathbf{y}_{q1}, \mathbf{y}_{q3})$. Ranking enables sorting the database items based on the similarity to a query item and it is an essential part of applications such as data search and retrieval. An example for this application can be seen as image based search from a large database of images based on specific similarity criteria.

**Analysis Similarity**

As discussed above, we can define an analysis operator $\mathbf{A} \in \mathbb{R}^{M \times N}$ such that sparse code $\mathbf{z}$ can be obtained from $\mathbf{Ay}$. FIG. 4 illustrates an exemplary analysis encoding process 400 ($\mathbf{z} = E_A(\mathbf{A}, \mathbf{y})$) for generating a sparse code $\mathbf{z}$ for vector $\mathbf{y}$, according to an embodiment of the present principles. At step 410, given vector $\mathbf{y}$ and analysis operator $\mathbf{A}$, the analysis encoder computes $\mathbf{Ay}$, for example, using liner projection. At step 420, the analysis encoder generates sparse code $\mathbf{z}$ using a non-line sparsifying function. The processed vector is then output as sparse code $\mathbf{z}$.

The non-linear sparsifying function can be, for example, but not limited to, hard thresholding, soft thresholding, or a function to select some values to zero and modify other values. The non-linear sparsifying function can also be a step function or a sigmoid function.

The analysis encoding process can also be used to generate sparse binary codes, $\mathbf{z_b}$, if the sparsifying function is simply the step function such that $z_{b,i} = \text{step}(\mathbf{A_{b,i}y}) = \begin{cases} 1 \text{ if } \mathbf{A_{b,i}y} > 0 \\ 0 \text{ if } \mathbf{A_{b,i}y} \leq 0 \end{cases}$ where $\mathbf{A_{b,i}}$ is the i-th row of the matrix linear projection matrix $\mathbf{A_b}$. The binary codes can directly be used to compare two images with their binary representations in a computationally fast and efficient manner.

In another example, the non-linear sparsifying function that generates non-binary sparse codes is a function that utilizes the binary representations, $\mathbf{z_b}$, by simply selecting the analysis encoding process as

$$z_i = \mathbf{A_{b,i}y} = \begin{cases} \mathbf{A_i y} \text{ if } z_{b,i} = 1 \\ 0 \text{ if } z_{b,i} = 0 \end{cases} = z_{b,i} \mathbf{A_i y}, \text{ or equivalently, } \mathbf{z} = E_A(\mathbf{A}, \mathbf{y}) = \mathbf{z_b} \odot \mathbf{Ay}.$$

The approach for computing the sparse codes in the simplest case is equivalent to defining a number of linear features among which only a few are active for each data vector. In more complicated cases the features can also be computed in a non-linear way. Such a representation can be powerful since the comparison using information only on the relevant features can be much more discriminative than simply using a linear projection of the original data vectors. Furthermore, given an analysis operator $\mathbf{A}$, an encoder function to retrieve $z_i$ can be much simpler (for example simple thresholding) than the encoder functions used for dictionaries.

Given an analysis operator $\mathbf{A}$ and the encoder function $E_A()$, we propose to utilize a similarity function of the form

$$(\textit{Analysis Similarity}) \quad S_{an}(\mathbf{y}_i, \mathbf{y}_j) = \mathbf{z}_i^\mathsf{T} \mathbf{z}_j, \qquad \mathbf{z}_i = E_A(\mathbf{y}_i, \mathbf{A}), \mathbf{z}_j = E_A(\mathbf{y}_j, \mathbf{A}) \qquad (14)$$

It should be noted that, rather than learning distances as described in Eq. (7), this approach learns a similarity function based on a correlation metric.

Here, we need to be careful with the choice of the analysis operator $\mathbf{A}$, since there can be infinitely many sparsifying analysis operators that does not provide information needed for the given task. Hence we propose learning the analysis operator $\mathbf{A}$ using the constraints given for the specific task at hand. In general $\mathbf{A}$ can be learned with an optimization of the form,

$$\bar{\mathbf{A}} = \underset{\mathbf{A}}{\operatorname{argmin}} \sum_{p-1}^{m} \ell(C_p) + \psi(\mathbf{A}) \quad \text{s.t.} \quad \mathbf{z}_t = \mathrm{E}_\mathrm{A}(\mathbf{y}_t, \mathbf{A}), \, t = 1, \ldots, T \tag{15}$$

in which the function $\ell(C_p)$ is selected as $\ell(\gamma_p \mathbf{z}_{i_p}^\mathrm{T} \mathbf{z}_{j_p})$ for the pair-wise constraints for verification, or $\ell(\mathbf{z}_{i_p}^\mathrm{T} \mathbf{z}_{j_p} - \mathbf{z}_{i_p}^\mathrm{T} \mathbf{z}_{k_p})$ for the triplet constraints for ranking. The function $l()$ in Eq. (15) is a function that penalizes the incorrectly estimated similarities in the training set, i.e., when $\gamma_p \mathbf{z}_{i_p}{}^T \mathbf{z}_{j_p}$ or $\mathbf{z}_{i_p}{}^T \mathbf{z}_{j_p} - \mathbf{z}_{i_p}{}^T \mathbf{z}_{k_p}$ is negative.

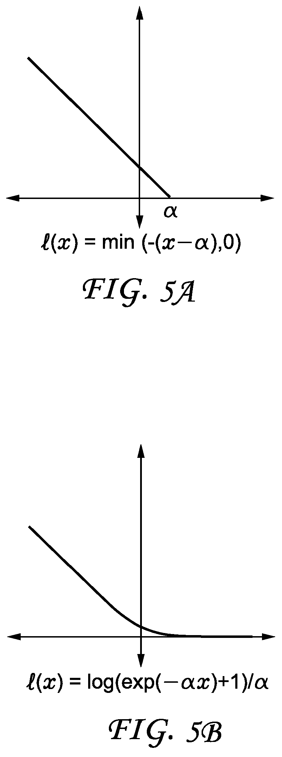

Two possible examples for the penalty function are the hinge loss functions as shown in FIG. 5A and FIG. 5B. In particular, FIG. 5A shows a parametrized hinge loss function $l(x) = \min(-(x - \alpha), 0)$, and FIG. 5B shows a continuous hinge loss function, $l(x) = \log(\exp(-\alpha x) + 1) / \alpha$. It should be noted that in order to learn binary representations that are generated by the step function, the step function must be replaced by a continuous function with a non-zero derivative during the learning process. An example is using the sigmoid function, $sgm_\alpha(x) = \dfrac{1}{1 + e^{-\alpha x}}$. The regularization function $\psi()$ is optional and can be used to enforce additional constraints on the operator $\mathbf{A}$. For example, when the binary sparse representations are being learned, the regularization function can be selected as the sum of all the coefficients in the binary representations of the training data, $\Psi(A) = \beta \sum_{t=1}^{T}[1 \ldots 1]\mathbf{z}_{\mathbf{b},t} = \beta \sum_{t=1}^{T} \sum_i \dfrac{1}{1 - e^{-A_i y_t}}$.

Another example for the regularization function $\psi()$ is an indicator function that penalizes the choices of $\mathbf{A}$ that do not obey a certain property such as having normalized rows. The vectors $\mathbf{y}_1 \ldots, \mathbf{y}_T$ are all the vectors used in the constraints (and equivalently in the training set T).

For the case that the sparse codes are generated via the sparse binary codes, one can also jointly learn $\mathbf{A}$ and $\mathbf{A_b}$, by setting the analysis encoding process as $\mathrm{E}_\mathrm{A}(\mathbf{A}, \mathbf{y}) = sgm_\alpha(\mathbf{A_b}\mathbf{y}) \odot \mathbf{A}\mathbf{y}$ during the optimization for learning, and learn both $\mathbf{A_b}$ and $\mathbf{A}$ jointly.

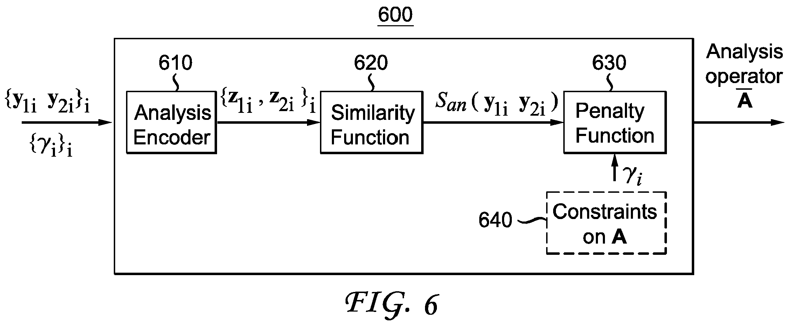

FIG. 6 illustrates an exemplary process 600 for learning analysis operator $\mathbf{A}$ using pair-wise constraints, according to an embodiment of the present principles. The input of the learning process includes many training vector pairs, $\{\mathbf{y}_{1i}, \mathbf{y}_{2i}\}_i$, each pair of which is marked as similar or dissimilar ($\gamma_i = 1$ or $-1$). The set of annotations, $\{\gamma_i\}_i$, is also input to the learning process. Assuming an analysis operator $\mathbf{A}$, for a pair of vectors $\mathbf{y}_{1i}, \mathbf{y}_{2i}$, analysis encoder (610) can generate sparse codes $\mathbf{z}_{1i}, \mathbf{z}_{2i}$, respectively. Subsequently, a similarity function (620) can be used to calculate the similarity between $\mathbf{y}_{1i}$ and $\mathbf{y}_{2i}$, for example, as $S_{an}(\mathbf{y}_{1i}, \mathbf{y}_{2i}) = \mathbf{z}_{1i}^T \mathbf{z}_{2i}$. Using the estimated similarity metric $S_{an}(\mathbf{y}_{1i}, \mathbf{y}_{2i})$ and annotated similarity result $\gamma_i$, a penalty function (630), for example, as described in Eq. (15), can be applied. Optionally, constraints on analysis operator $\mathbf{A}$ can be applied (640), for example, using function $\psi()$ as described in Eq. (15). Generally the penalty function sets a large value when the estimated similarity metric does not match the annotated result. The penalty function is accumulated over the training vector pairs, and the analysis operator that minimizes the penalty function, i.e., the analysis operator that provides the closest similarity measures to the annotation results is chosen as the solution $\bar{\mathbf{A}}$.

The learning process when triplet constraints are used for training is similar to process 600. However, the input now includes training vector triplets $\{\mathbf{y}_{1i}, \mathbf{y}_{2i}, \mathbf{y}_{3i}\}_i$ where $\mathbf{y}_{1i}$ and $\mathbf{y}_{2i}$ are more similar than $\mathbf{y}_{1i}$ and $\mathbf{y}_{3i}$ are. The analysis encoder generates sparse codes $\mathbf{z}_{1i}, \mathbf{z}_{2i}, \mathbf{z}_{3i}$ for each training vector triplet $\mathbf{y}_{1i}, \mathbf{y}_{2i}, \mathbf{y}_{3i}$. The similarity function is applied to $\mathbf{z}_{1i}, \mathbf{z}_{2i}$ and to $\mathbf{z}_{1i}, \mathbf{z}_{3i}$ to get $S_{an}(\mathbf{y}_{1i}, \mathbf{y}_{2i})$ and $S_{an}(\mathbf{y}_{1i}, \mathbf{y}_{3i})$, respectively. The penalty function takes $S_{an}(\mathbf{y}_{1i}, \mathbf{y}_{2i})$ and $S_{an}(\mathbf{y}_{1i}, \mathbf{y}_{3i})$ as input, and penalizes the function when $S_{an}(\mathbf{y}_{1i}, \mathbf{y}_{2i})$ indicates less similarity than $S_{an}(\mathbf{y}_{1i}, \mathbf{y}_{3i})$.

It is possible to solve the minimization problem of Eq. (15) directly using steepest descent methods. It is also possible to simplify it further by relaxing the constraint in Eq. (15), so that the objective function is smoother and easier to optimize. For a simple encoder function such as

$$\mathrm{E}_\mathrm{A}(\mathbf{y}, \mathbf{A}) = \underset{\mathbf{z}}{\operatorname{argmin}} \|\mathbf{z} - \mathbf{A}\mathbf{y}\|_2^2 + \lambda \|\mathbf{z}\|_1 \tag{16}$$

one can relax the equality constraint in Eq. (15) and perform the joint minimization

$$\bar{\mathbf{A}}, \bar{\mathbf{z}}_1, \ldots, \bar{\mathbf{z}}_T = \underset{\mathbf{A}, \mathbf{z}_1, \ldots, \mathbf{z}_T}{\operatorname{argmin}} \sum_{p-1}^{m} \ell(C_p) + \psi(\mathbf{A}) + \lambda_1 \sum_{t-1}^{T} \left( \|\mathbf{z}_t - \mathbf{A}\mathbf{y}_t\|_2^2 + \lambda_2 \|\mathbf{z}_t\|_1 \right) \tag{17}$$

in which the function $\ell(C_p)$ is selected according to the task as in Eq. (15) and the constants $\lambda_1, \lambda_2 > 0$ determine the tradeoff between the performance in the task, the sparsity of the codes and the distance between $z_t$ and $E_A(y_t, A)$.

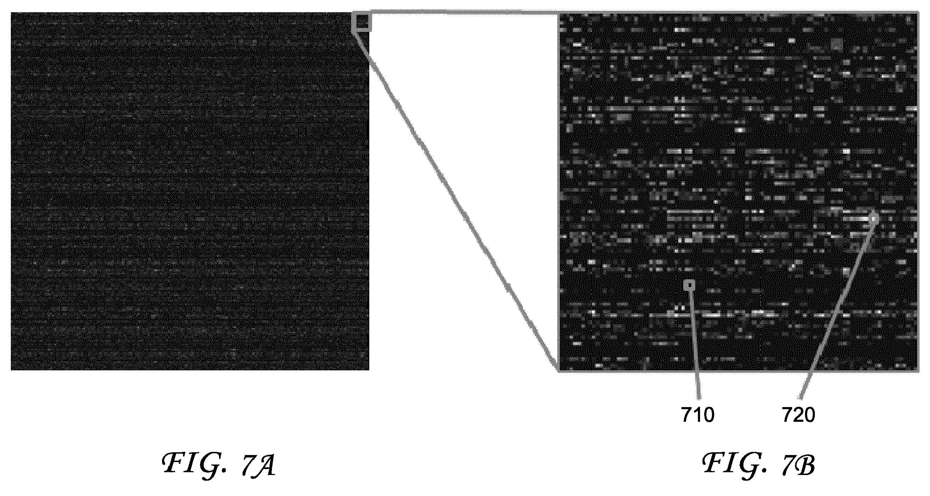

FIG. 7A shows exemplary sparse codes for images in a database, where FIG. 7B is an expanded view of the upper-right portion of FIG. 7A. In the visualization of the sparse coefficients (vertical axis) of the first 2000 images (horizontal axis), a dark pixel (710) indicates "0" in the vector, and a gray pixel (720) indicates the magnitude of the non-zero in the vector. We can see that most pixels in FIG. 7 are dark (i.e., coefficients are sparse), and thus, our methods successfully learned sparse representation. Therefore a similarity function can be computed very fast given the sparse representation.

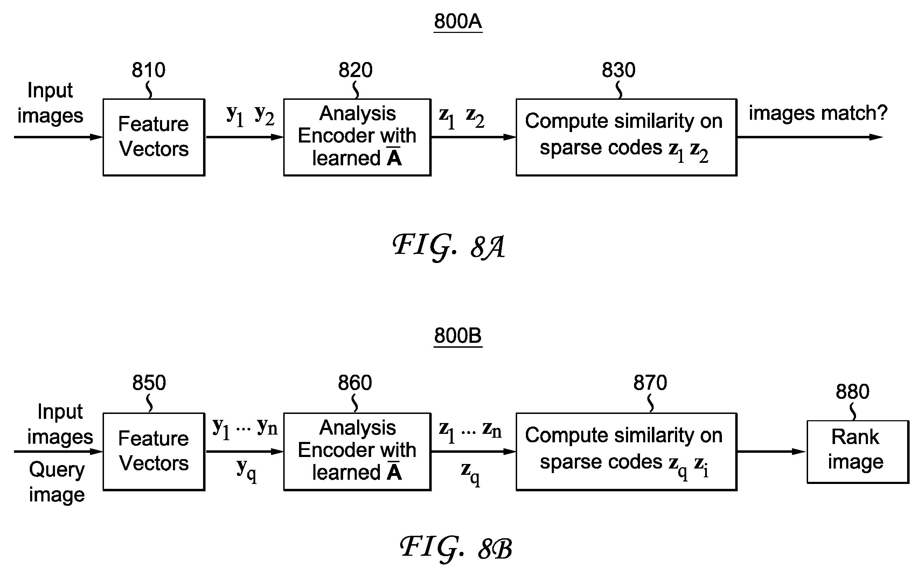

FIG. 8A illustrates an exemplary process 800A for performing image matching, according to an embodiment of the present principles. Two input images are represented by feature vectors $y_1$ and $y_2$, respectively (810). Analysis encoder (820) with learned operator $\overline{A}$ is used to sparsify vectors $y_1$ and $y_2$ to generate sparse codes $z_1$ and $z_2$, respectively. Then a similarity metric (830) can be calculated based on the sparse codes, for example, using the correlation metric as Eq. (14). Based on whether the similarity metric exceeds a threshold or not, we decide whether the two input images are matching or not.

FIG. 8B illustrates an exemplary process 800B for performing image ranking for a query image, according to an embodiment of the present principles. For the query image and the database images, feature vectors $y_q$ and $y_1,...,$ $y_n$ are generated (850), respectively. Analysis encoder (860) with learned operator $\overline{A}$ is used to sparsify vectors $y_q$ and $y_1,..., y_n$ to generate sparse codes $z_q$ and $z_1,..., z_n$, respectively. Then a similarity metric (870) can be calculated based on the sparse codes for the pair of $\{z_q, z_i\}$, $i = 1,..., n$, for example, using the correlation metric as Eq. (14). Based on the values of the similarity metrics, we can decide the order of similarity to the query image among the database images and images are ranked (880).

A post processing step to the encoder function can be added that adds an extra entry to vector $z$ that is equal to 1, which would further improve the flexibility of the proposed encoding algorithms. A pre-processing step to the encoder function can be added that adds an extra entry to the vector $y$ that is equal to 1, which would further improve the flexibility of the proposed matching and ranking algorithms.

It should be noted that for image databases, the process of computing the sparse codes $z_1,...,z_n$ can be performed offline. Thus, for feature vectors $y_1,...,y_n$ representing images from the databases, the corresponding encoding functions can be pre-computed offline and the sparse codes can be stored.

Multilayer Analysis Similarity

It is possible to interpret the analysis encoder function $E_A(y, A)$ (such as Eq. (16)) as a single layer neural network realization with the network coefficients given by the operator $A$. It is already known that the performance of neural networks are significantly improved by deep architectures that have multiple layers. This idea can also be used for the proposed analysis similarity computation by replacing the analysis encoder function $E_A(y, A)$ with the N-layer analysis encoder function

$$E_{MLA}(y, A_1, ..., A_N) = E_A(... E_A(E_A(y, A_1), A_2) ..., A_N) \qquad (27)$$

in Eq. (15). In one embodiment, where $E_A(y, A) = \underset{\lambda}{\mathrm{soft}}(Ay)$, where soft thresholding is defined as

$$\underset{\lambda}{\mathrm{soft}}(a) \triangleq \begin{cases} (|a_i| - \lambda_i)\,\mathrm{sign}\,a_i & \text{if} \quad |a_i| > \lambda_i \\ 0 & \text{else} \end{cases} \qquad (28)$$

the N-layer analysis encoder becomes

$$E_{MLA}(y, A_1, ..., A_N) = \underset{\lambda_N}{\mathrm{soft}}(A_N ... \underset{\lambda_2}{\mathrm{soft}}(A_2 \underset{\lambda_1}{\mathrm{soft}}(A_1 y)) ...). \qquad (29)$$

The operators $A_1, ..., A_N$ and parameters $\lambda_1, ..., \lambda_N$ can be trained using a training database, for example, using pair-wise constraints or triplet constraints.

Metric Learning with Automatic Rank Minimization

The analysis operator can also be used to learn a low rank Mahalanobis metric transformation matrix **W** such that the similarity function is simply

$$S(\mathbf{y}_i, \mathbf{y}_j) = \mathbf{y}_j{}^T\mathbf{W}\mathbf{y}_i \tag{30}$$

where $\mathbf{W} = \mathbf{A}^T\mathbf{A}$, as described in an article by K. Simonyan, O. M. Parkhi, A. Vedaldi, and A. Zisserman, entitled "Fisher Vector Faces in the Wild," In British Machine Vision Conference, 2013. In metric learning, it is known that when the Mahalanobis matrix is low rank, it can be used to generalize the characteristics of the overall system. However the rank of matrix **W** must often be explicitly defined before the optimization. Alternatively, some methods penalize the nuclear norm of the matrix **W** in the classical Mahalanobis metric learning so that a low rank Mahalanobis matrix can be learned. However this approach requires a singular value decomposition of the matrix **W** (or **A**) at every iteration of the learning algorithm and can significantly slow down the learning algorithm when the training dataset is large.

The analysis similarity learning processes as described above, which enforce sparse codes, also enforce the matrix **A** to be composed of rows that provide the most contribution to the similarity function for the ranking task. As a result, one can train the system by minimizing the same objective function as described in Eq. (15), and then use the similarity function in Eq. (30) with $\mathbf{W} = \hat{\mathbf{A}}^T\hat{\mathbf{A}}$ where $\hat{\mathbf{A}}$ is formed by using N most significant rows of **A**, namely, N rows of **A** with largest norm (power), or N rows of **A** that lead to largest average power among the resulting sparse codes of the training data. This enables finding a low rank matrix without the need to perform singular value or eigenvalue decompositions during the learning stage and it can be performed on large databases using a stochastic gradient descent type of algorithm.

If we consider the vectors $\mathbf{z}_i = \hat{A}\mathbf{y}_i$, $\mathbf{z}_j = \hat{A}\mathbf{y}_j$ as the feature vectors, then similarity function in Eq. (30) is a correlation based function since $S(\mathbf{y}_i, \mathbf{y}_j) = \mathbf{y}_j{}^T\mathbf{W}\mathbf{y}_i = \mathbf{z}_j{}^T\mathbf{z}_i$. The same approach can be used also for the classical Mahalanobis metric learning based on the distances in which the distance between two items are estimated as

$$D(\mathbf{y}_i, \mathbf{y}_j) = \sqrt{(\mathbf{y}_i - \mathbf{y}_j)^T\mathbf{W}(\mathbf{y}_i - \mathbf{y}_j)} = \left\|\hat{\mathbf{A}}(\mathbf{y}_i - \mathbf{y}_j)\right\|_2 \tag{31}$$

where **W** is a low rank and positive semi-definite matrix. We can enforce the transformed difference of the training pairs, $\hat{A}(\mathbf{y}_i - \mathbf{y}_j)$, to be sparse to obtain a low rank **W.** Hence we can replace the similarity function in Eq. (15) with $S(\mathbf{y}_i, \mathbf{y}_j) = -D^2(\mathbf{y}_i, \mathbf{y}_j)$ that is based on distances rather than correlations to learn an analysis operator **A**, and then use $\mathbf{W} = \hat{\mathbf{A}}^T\hat{\mathbf{A}}$ as the low rank Mahalanobis matrix in Eq. (31) where $\hat{\mathbf{A}}$ is formed by using most significant rows of **A.** Note that in Eq. (15), the term $\mathbf{z}_j^T \mathbf{z}_i$ in $\mathbf{C}_p$ is the predefined similarity function as mentioned in Eq. (14), which can be replaced with a distance-based metric. Generally, the proposed training/learning method can obtain a low rank matrix for metric learning in an efficient and low-complexity manner.

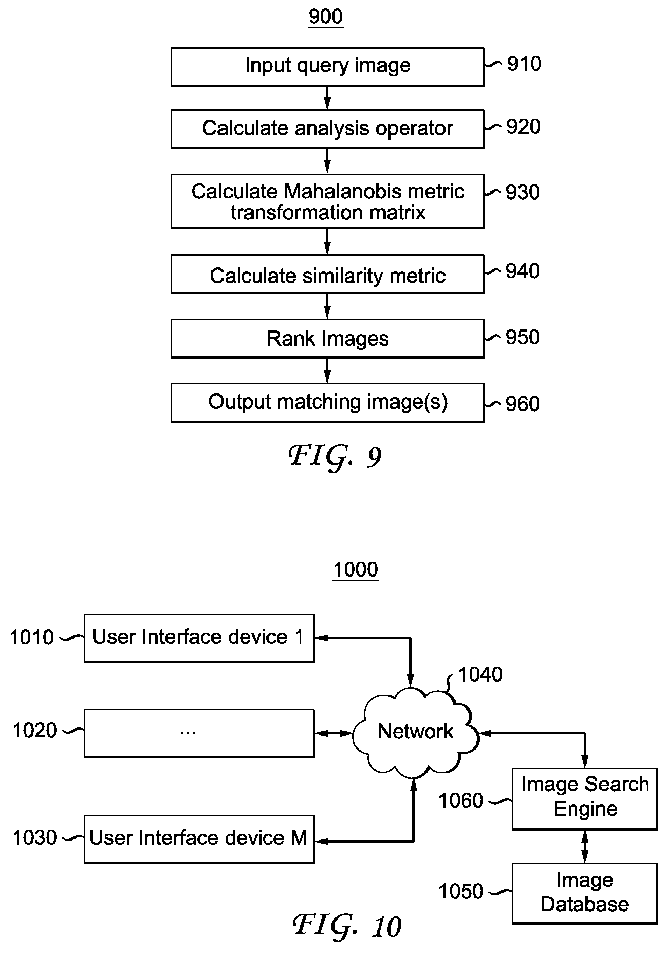

The automatic rank minimization can be used for image matching and search. FIG. 9 illustrates an exemplary method 900 for performing image search based on a Mahalanobis metric, according to an embodiment of the present principles. At step 910, a query image is input. At step 920, we can calculate analysis operator **A**, for example, using the analysis similarity learning process as described before. Alternatively, we can use a modified version of the learning process that uses distance-based instead of correlation-based similarity function. Matrix $\hat{\mathbf{A}}$ can then be obtained by using most significant rows of **A.** At step 930, we can calculate Mahalanobis metric transformation matrix $\mathbf{W} = \hat{\mathbf{A}}^T\hat{\mathbf{A}}$, Then at step 940, we can calculate a similarity metric using Eq. (30) or (31) between the query image and images from an image database. At step 950, we can rank the order of similarity to the query image among the images of the image database based on output similarity metrics. Subsequently, we choose the best match(es) as the matching image(s) and output the matching image(s) at step 960.

Initial experiments have been performed using the proposed similarity metric in Eq. (14) and enforcing normalized rows for matrix **A.** The image descriptors and the datasets described in an article by K. Simonyan and A. Zisserman, entitled "Very Deep Convolutional Networks for Large-Scale Image Recognition," CoRR, Sept. 2014, are used to train and test the learned similarity metric with the only difference being normalizing the descriptors. The resulting false positive rates for 95% recall are shown in Table 1. For comparison, the performance of using the normalized descriptors (by computing correlation or equivalently $\ell_2$ distance) without any learning has also been shown. The proposed metric provides a good similarity estimation performance.

**TABLE 1. False positive rate corresponding to 95 % recall**

| Trained Dataset | Tested Dataset | Proposed | Baseline |
|---|---|---|---|
| Yosemite | Liberty | **17.83** | 23.82 |
| Yosemite | Notredame | **10.71** | 17.25 |
| Liberty | Yosemite | 20.20 | **17.36** |
| Liberty | Notredame | **11.25** | 14.77 |
| Notredame | Liberty | **16.87** | 21.59 |
| Notredame | Yosemite | 20.18 | **19.50** |

FIG. 10 illustrates an exemplary system 1000 that has multiple user devices connected to an image search engine according to the present principles. In FIG. 10, one or more user devices (1010, 1020, and 1030) can communicate with image search engine 1060 through network 1040. The image search engine is connected to multiple users, and each user may communicate with the image search engine through multiple user devices. The user interface devices may be remote controls, smart phones, personal digital assistants, display devices, computers, tablets, computer terminals, digital video recorders, or any other wired or wireless devices that can provide a user interface.

The image search engine 1060 may implement various methods as discussed above. Image database 1050 contains one or more databases that can be used as a data source for searching images that match a query image or for training the parameters.

In one embodiment, a user device may request, through network 1040, a search to be performed by image search engine 1060 based on a query image. Upon receiving the request, the image search engine 1060 returns one or more matching images and/or their rankings. After the search result is generated, the image database 1050 provides the matched image(s) to the requesting user device or another user device (for example, a display device).

When a user device sends a search request to the image search engine, the user device may send the query image directly to the image search engine. Alternatively, the user device may process the query image and send a signal representative of the query image. For example, the user device may perform feature extraction on the query image and send the feature vector to the search engine. Or the user device may further perform sparsifying function and send the sparse representation of the query image to the image search engine. These various embodiments distribute the computations needed for image search between the user device and image search engine in different manners. The embodiment to use may be decided by the user device's computational resources, network capacity, and image search engine computational resources.

The image search may also be implemented in a user device itself. For example, a user may decide to use a family photo as a query image, and to search other photos in his smartphone with the same family members.

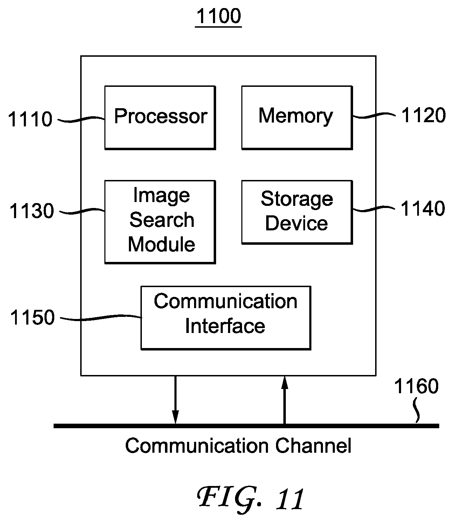

FIG. 11 illustrates a block diagram of an exemplary system 1100 in which various aspects of the exemplary embodiments of the present principles may be implemented. System 1100 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1100 may be communicatively coupled to other similar systems, and to a display via a communication channel as shown in FIG. 11 and as known by those skilled in the art to implement the exemplary video system described above.

The system 1100 may include at least one processor 1110 configured to execute instructions loaded therein for implementing the various processes as discussed above. Processor 1110 may include embedded memory, input output interface and various other circuitries as known in the art. The system 1100 may also include at least one memory 1120 (e.g., a volatile memory device, a non-volatile memory device). System 1100 may additionally include a storage device 1140, which may include non-volatile memory, including, but not limited to, EEPROM, ROM, PROM, RAM, DRAM, SRAM, flash, magnetic disk drive, and/or optical disk drive. The storage device 1140 may comprise an internal storage device, an attached storage device and/or a network accessible storage device, as non-limiting examples. System 1100 may also include an image search engine 1130 configured to process data to provide image matching and ranking results.

Image search engine 1130 represents the module(s) that may be included in a device to perform the image search functions. Image search engine 1130 may be implemented as a separate element of system 1100 or may be incorporated within processors 1110 as a combination of hardware and software as known to those skilled in the art.

Program code to be loaded onto processors 1110 to perform the various processes described hereinabove may be stored in storage device 1140 and subsequently loaded onto memory 1120 for execution by processors 1110. In accordance with the exemplary embodiments of the present principles, one or more of the processor(s) 1110, memory 1120, storage device 1140 and image search engine 1130 may store one or more of the various items during the performance of the processes discussed herein above, including, but not limited to a query image, the analysis operator, synthesis operator, sparse codes, equations, formula, matrices, variables, operations, and operational logic.

The system 1100 may also include communication interface 1150 that enables communication with other devices via communication channel 1160. The communication interface 1150 may include, but is not limited to a transceiver configured to transmit and receive data from communication channel 1160. The communication interface may include, but is not limited to, a modem or network card and the communication channel may be implemented within a wired and/or wireless medium. The various components of system 1100 may be connected or communicatively coupled together using various suitable connections, including, but not limited to internal buses, wires, and printed circuit boards.

The exemplary embodiments according to the present principles may be carried out by computer software implemented by the processor 1110 or by hardware, or by a combination of hardware and software. As a non-limiting example, the exemplary embodiments according to the present principles may be implemented by one or more integrated circuits. The memory 1120 may be of any type appropriate to the technical environment and may be implemented using any appropriate data storage technology, such as optical memory devices, magnetic memory devices, semiconductor-based memory devices, fixed memory and removable memory, as non-limiting examples. The processor 1110 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method for performing image search, comprising:

accessing (130) a first sparse representation of a query image, the first sparse representation being based on a first feature vector corresponding to the query image and an analysis operator;
determining (140) a similarity metric between the query image and a second image of an image database using a correlation between the first sparse representation and a second representation, the second sparse representation being based on a second feature vector corresponding to the second image and the analysis operator; and
generating (160) an image search output based on the similarity metric between the query image and the second image.

2. The method according to claim 1, wherein the image search output indicates one of (1) a rank of the second image and (2) whether the second image matches the query image.

3. The method according to claim 1 or 2, wherein the first sparse representation is received from a user device via a communication network, further comprising transmitting the output to the user device via the communication network.

4. The method according to any of claims 1-3, wherein the first sparse representation is based on a product of the analysis operator and the first feature vector, and wherein the second sparse representation is based on a product of the analysis operator and the second feature vector.

5. The method according to any of claims 1-4, wherein at least one of the first sparse representation and the second sparse representation is binary.

6. The method according to any of claims 1-5, wherein the first sparse representation and the second sparse representation are non-binary, and wherein the first sparse representation and the second sparse representation are determined from a third sparse representation and a fourth sparse representation, respectively, wherein the third sparse representation and the fourth sparse representation are binary.

7. The method according to any of claims 1-6, wherein the analysis operator is determined based on a set of pair-wise constraints, wherein each pair-wise constraint indicates whether a corresponding pair of training images are similar or dissimilar.

8. The method according to any of claims 1-7, wherein the analysis operator is determined based on a set of triplet constraints, wherein each triplet constraint indicates that a first training image of the triplet is more similar to a second training image of the triplet than to a third training image of the triplet.

9. The method according to claim 7 or 8, wherein the analysis operator is trained such that a similarity metric determined for training images corresponding to a pair-wise constraint or a triplet constraint is consistent with what the pair-wise constraint or the triplet constraint indicates.

10. The method according to claim 9, wherein the analysis operator is determined using a penalty function.

11. The method according to any of claims 1-10, wherein the analysis operator is determined using a multiple layer neural network.

12. The method according to any of claims 1-11, wherein the analysis operator is used to determine a Mahalanobis metric transformation matrix.

13. An apparatus for performing image search, comprising:

an input configured to access a first sparse representation of a query image, the first sparse representation being based on a first feature vector corresponding to the query image and an analysis operator; and
one or more processors (1130) configured to:

determine a similarity metric between the query image and a second image of an image database using a correlation between the first sparse representation and a second representation, the second sparse representation being based on a second feature vector corresponding to the second image and the analysis operator, and

generate an image search output based on the similarity metric between the query image and the second image.

14. An apparatus for performing image search, comprising a memory and one or more processors configured to perform the method according to any of claims 1-12.

15. A non-transitory computer readable storage medium having stored thereon instructions for implementing a method according to any of claims 1-12.

## 100

| | |
|---|---|
| Input query image | ⌐ 110 |
| Image feature vector calculation | ⌐ 120 |
| Compact representation | ⌐ 130 |
| Distance/similarity calculation | ⌐ 140 |
| Image ranking | ⌐ 150 |
| Output matching image(s) | ⌐ 160 |

*FIG. 1*

## 200

| | |
|---|---|
| Input training set | ⌐ 210 |
| Similarity constraints | ⌐ 220 |
| Learn operator for the similarity function | ⌐ 230 |

*FIG. 2*

310

320

330

340

*FIG. 3*

**400**

410

420

y → | Linear Projection | **Ay** → | Non-linear Sparsifying Function | → **z** sparse code

**A**

*FIG. 4*

$$\ell(x) = \min (-(x-\alpha),0)$$

## FIG. 5A

$$\ell(x) = \log(\exp(-\alpha x)+1)/\alpha$$

## FIG. 5B

EP 3 166 022 A1

$\underline{600}$

$\{\mathbf{y}_{1i} \ \mathbf{y}_{2i}\}_i$

$\{\gamma_i\}_i$

610

Analysis Encoder

$\{\mathbf{z}_{1i}, \mathbf{z}_{2i}\}_i$

620

Similarity Function

$S_{an}(\mathbf{y}_{1i} \ \mathbf{y}_{2i})$

630

Penalty Function

$\gamma_i$

640

Constraints on **A**

Analysis operator $\overline{\mathbf{A}}$

*FIG. 6*

FIG. 7A

FIG. 7B

710

720

EP 3 166 022 A1

800A

| | 810 | | 820 | | 830 | |
|---|---|---|---|---|---|---|

Input images → **Feature Vectors** (810) → $y_1$ $y_2$ → **Analysis Encoder with learned $\bar{A}$** (820) → $z_1$ $z_2$ → **Compute similarity on sparse codes $z_1$ $z_2$** (830) → images match?

*FIG. 8A*

800B

Input images / Query image → **Feature Vectors** (850) → $y_1 \ldots y_n$ / $y_q$ → **Analysis Encoder with learned $\bar{A}$** (860) → $z_1 \ldots z_n$ / $z_q$ → **Compute similarity on sparse codes $z_q$ $z_i$** (870) → **Rank image** (880)

*FIG. 8B*

## 900

Input query image — 910

Calculate analysis operator — 920

Calculate Mahalanobis metric transformation matrix — 930

Calculate similarity metric — 940

Rank Images — 950

Output matching image(s) — 960

*FIG. 9*

## 1000

1010 — User Interface device 1

1020 — ...

1030 — User Interface device M

1040 — Network

1060 — Image Search Engine

1050 — Image Database

*FIG. 10*

<u>1100</u>

1110 — Processor

Memory — 1120

1130 — Image Search Module

Storage Device — 1140

1150 — Communication Interface

1160

Communication Channel

*FIG. 11*

Europäisches
Patentamt

European
Patent Office

Office européen
des brevets

# EUROPEAN SEARCH REPORT

Application Number

EP 15 30 6771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MD MAHMUDUR RAHMAN ET AL: "Local concept-based medical image retrieval with correlation-enhanced similarity matching based on global analysis", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 June 2010 (2010-06-13), pages 87-94, XP031728638, ISBN: 978-1-4244-7029-7 * section 3 * | 1-15 | INV. G06F17/30 |
| X | Pablo Sprechmann ET AL: "Efficient Supervised Sparse Analysis and Synthesis Operators", , 1 January 2013 (2013-01-01), XP055270405, Retrieved from the Internet: URL:http://papers.nips.cc/paper/5002-supervised-sparse-analysis-and-synthesis-operators.pdf [retrieved on 2016-05-03] * section 1 * | 1-15 | |
| A,D | KAREN SIMONYAN ET AL: "Fisher Vector Faces in the Wild", PROCEDINGS OF THE BRITISH MACHINE VISION CONFERENCE 2013, 1 January 2013 (2013-01-01), pages 8.1-8.11, XP055270853, DOI: 10.5244/C.27.8 ISBN: 978-1-901725-49-0 * section 3 * | 1-15 | |

TECHNICAL FIELDS SEARCHED (IPC)

G06F

-/--

The present search report has been drawn up for all claims

1

| Place of search | Date of completion of the search | Examiner |
|---|---|---|
| The Hague | 6 May 2016 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 15 30 6771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Karen Simonyan ET AL: "Very Deep Convolutional Networks for Large-Scale Image Recognition", , 4 September 2014 (2014-09-04), XP055270857, Retrieved from the Internet: URL:http://arxiv.org/pdf/1409.1556v6.pdf [retrieved on 2016-05-06] * section 3.1 * ----- | 1-15 | |
| A | US 2012/308121 A1 (DATTA ANKUR [US] ET AL) 6 December 2012 (2012-12-06) * paragraph [0004] * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 6 May 2016 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6771

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2016

| Patent document cited in search report | Publication date | Patent family member(s) | Publication date |
|---|---|---|---|
| US 2012308121  A1 | 06-12-2012 | CN    102855268  A<br>US    2012308121  A1<br>US    2015039542  A1 | 02-01-2013<br>06-12-2012<br>05-02-2015 |

EPO FORM P0459

For more details about this annex : see Official Journal of the European Patent Office, No. 12/82